# FASCICULE DE BREVET EUROPEEN

(11) **EP 1 884 650 B1**
(45) Date de publication et mention de la délivrance du brevet: **31.08.2016**
(21) Numéro de dépôt: 07111957.2
(22) Date de dépôt: 06.07.2007
(51) Int. Cl.: F02K 3/06, F02K 1/09, F02K 1/38, F02K 1/72

(54) **Tuyère d'éjection des gaz pour turbomachine à double flux**
Schubdüse für zweiströmige Strömungsmaschine
Gas exhaust nozzle for a bypass flow turbomachine

(30) Priorité: 26.07.2006 FR 0653132
(43) Date de publication de la demande: 06.02.2008
(73) Titulaire: SNECMA, 75015 Paris (FR)
(72) Inventeur: Chanez, Philippe, 75015 Paris (FR); Zeggai, Kamel, 93140 Bondy (FR)
(74) Mandataire: Boura, Olivier

(56) Documents cités:
- EP-A1- 0 780 562
- GB-A- 2 372 779
- US-A- 3 581 841
- US-A- 3 797 785
- US-A- 5 778 659

## Description

### Arrière-plan de l'invention

La présente invention se rapporte au domaine général des tuyères d'éjection des gaz équipant les turbomachines à double flux, et plus particulièrement à une tuyère de turbomachine ayant une section d'éjection ou de col variable en fonction des régimes de fonctionnement.

Une tuyère de turbomachine à double flux se compose typiquement d'un corps central annulaire centré sur un axe longitudinal de la tuyère, d'un capot primaire annulaire entourant de façon coaxiale le corps central pour délimiter avec celui-ci un canal annulaire primaire, et d'un capot secondaire annulaire entourant de façon coaxiale le capot primaire pour délimiter avec celui-ci un canal annulaire secondaire coaxial au canal primaire.

On appelle « section de col de la tuyère » la section transversale du canal secondaire qui est la plus faible sur toute la longueur de la tuyère. On appelle « section d'éjection de la tuyère » la section transversale du canal secondaire qui est la plus en aval.

Il est connu qu'en faisant varier la section d'éjection ou de col de la tuyère d'une turbomachine, il est possible de contrôler le débit de la soufflante de celle-ci de façon à la placer dans des conditions de fonctionnement correspondant à un rendement optimum quels que soient les régimes de la turbomachine. L'utilisation de tuyères d'éjection à section géométriquement variable est ainsi courante dans les applications militaires. Les techniques employées font généralement recours à des volets disposés dans le prolongement de l'extrémité aval de la tuyère et dont le braquage permet de réduire ou d'augmenter la section d'éjection ou de col de la tuyère.

Or, de telles techniques sont difficiles à implanter sur des tuyères de turbomachines civiles. Ceci est notamment dû aux contraintes liées à l'installation de la nacelle par rapport à l'aile de l'avion, à la garde au sol, aux épaisseurs et à la forme des bords de fuite de la nacelle. En outre, de telles tuyères à section variable ont un coût de fabrication relativement élevé.

Aussi, les tuyères utilisées dans le civil ont généralement une section d'éjection ou de col géométriquement fixe qui est optimisée pour le vol de croisière qui représente la plus grande partie de la mission d'un avion. Il en résulte que les tuyères à section fixe fonctionnent de manière dégradée à haut régime de fonctionnement (correspondant au décollage et à la phase d'ascension de l'avion) et à bas régime de fonctionnement (correspondant à la descente, à la phase d'approche et au mode ralenti en vol de l'avion).

US 5,778,659 décrit une tuyère telle que définie dans le préambule de la revendication 1.

### Objet et résumé de l'invention

La présente invention a donc pour but principal de pallier de tels inconvénients en proposant une tuyère d'éjection des gaz pour turbomachine à double flux ayant une section d'éjection ou de col géométriquement variable en fonction des régimes de fonctionnement de la turbomachine.

Conformément à l'invention, ce but est atteint grâce à une tuyère selon la revendication 1.

Par translation longitudinale vers l'amont ou vers l'aval de la partie mobile du capot primaire, il est possible d'ouvrir ou de fermer de façon continue et précise la section d'éjection ou de col de la tuyère en fonction des régimes de fonctionnement de la turbomachine. Ce système présente de nombreux avantages, notamment d'être robuste, précis, compatible avec les tuyères existantes, à apport de masse relativement faible et de montage aisé sur les turbomachines à double flux utilisées dans le civil. Il est notamment facilement adaptable aux tuyères dont l'inversion de poussée est obtenue par translation du capot secondaire.

La présence de motifs disposés dans le prolongement du bord de fuite de la partie fixe du capot secondaire permet, d'une part de diminuer la traînée parasite produite par la « marche » qui apparaît inévitablement entre les parties fixe et mobile du capot secondaire lors du déplacement de la partie mobile, et d'autre part de contribuer à la réduction des émissions acoustiques quelque soit la position de la partie mobile du capot secondaire.

Selon une disposition avantageuse de l'invention, la partie mobile du capot secondaire présente un diamètre interne décroissant vers l'aval et le capot primaire présente au niveau de sa portion en regard de la partie mobile du capot secondaire une portion annulaire aval ayant un diamètre externe décroissant vers l'aval, la partie mobile du capot secondaire pouvant être déplacée longitudinalement entre deux positions extrêmes : une position extrême aval correspondant à une section d'éjection ou de col nominale et une position extrême amont correspondant à une section d'éjection ou de col réduite au maximum.

Le capot secondaire de la tuyère peut comporter au moins un vérin destiné à déplacer longitudinalement la partie mobile dudit capot.

L'invention concerne également une turbomachine comportant une tuyère telle que définie précédemment.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est demi vue très schématique et en coupe longitudinale d'une turbomachine partielle équipée d'une tuyère selon l'invention ;
- la figure 2 est une loupe de la figure 1 ; et
- la figure 3 est une vue partielle, en perspective et en éclaté de la tuyère de la figure 1.

### Description détaillée d'un mode de réalisation

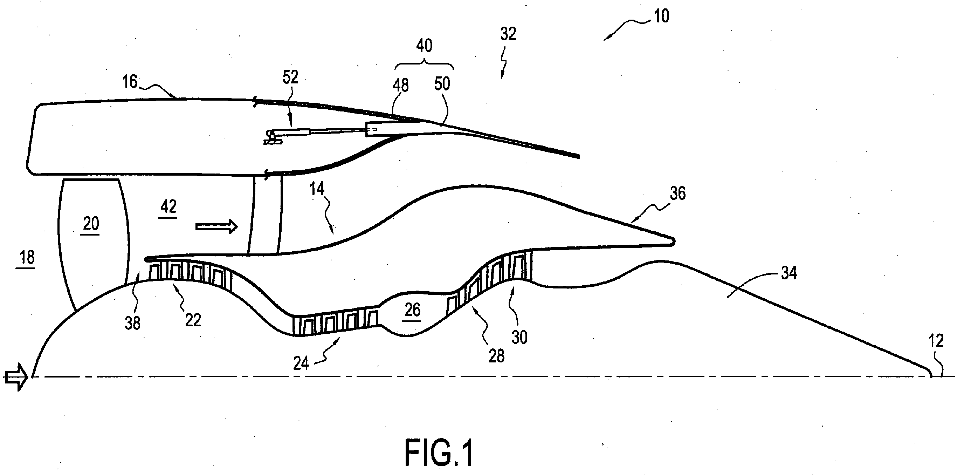

La figure 1 représente de façon très schématique et en coupe longitudinale une turbomachine à double flux 10 équipée d'une tuyère selon l'invention. La turbomachine possède un axe longitudinal 12 et se compose d'un moteur à turbine à gaz 14 et d'une nacelle annulaire 16 centrée sur l'axe 12 et disposée concentriquement autour du moteur.

D'amont en aval selon le sens d'écoulement d'un flux d'air traversant la turbomachine, le moteur 14 comprend une entrée d'air 18, une soufflante 20, un compresseur basse-pression 22, un compresseur haute-pression 24, une chambre de combustion 26, une turbine haute-pression 28 et une turbine basse-pression 30, chacun de ces éléments étant disposé selon l'axe longitudinal 12.

La tuyère 32 d'éjection des gaz produits par une telle turbomachine se compose d'un corps central annulaire 34 centré sur l'axe longitudinal 12 de la turbomachine, d'un capot primaire annulaire 36 entourant de façon coaxiale le corps central pour délimiter avec celui-ci un canal annulaire primaire 38, et d'un capot secondaire annulaire 40 entourant de façon coaxiale le capot primaire pour délimiter avec celui-ci un canal annulaire secondaire 42 coaxial au canal primaire (dans l'exemple de réalisation de la figure 1, la nacelle 16 de la turbomachine et le capot secondaire 40 de la tuyère sont une seule et même pièce).

On notera que sur l'exemple de réalisation de la figure 1, le corps central 34 de la tuyère 32 est de type externe, c'est à dire que le corps central s'étend longitudinalement au-delà du bord de fuite du capot primaire 36.

Toutefois, l'invention peut également s'appliquer à une tuyère à flux séparés de type interne dans laquelle le bord de fuite du capot primaire s'étend longitudinalement au-delà du corps central de façon à recouvrir complètement ce dernier.

Le cheminement de l'air au travers de la turbomachine est le suivant. L'air est admis dans la turbomachine par l'entrée d'air 18. En aval de la soufflante 20, le flux d'air se divise en une partie qui s'écoule dans le canal secondaire 42 et une autre qui emprunte le canal primaire 38. Dans ce dernier, l'air est comprimé par les compresseurs 22, 24, mélangé à du carburant dans la chambre de combustion 26 et brûlé. Les gaz issus de cette combustion entraînent les turbines haute-pression 28 et basse-pression 30 avant d'être évacués.

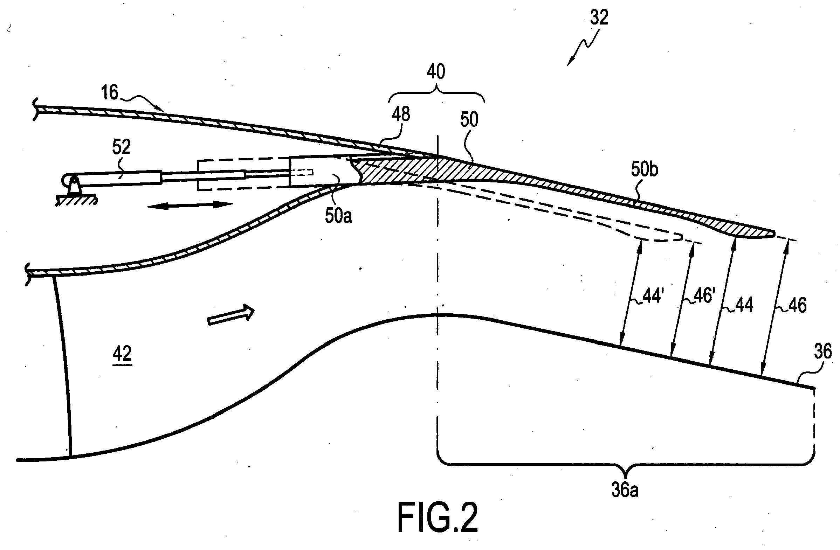

Comme représenté à la figure 2, la tuyère 32 d'éjection des gaz présente une section de col 44 qui correspond à la section transversale minimale du canal secondaire 42 sur toute la longueur de la tuyère et une section d'éjection 46 qui correspond à la section transversale du canal secondaire qui est la plus en aval de la tuyère.

Selon l'invention, le capot secondaire 40 de la tuyère se compose d'une partie fixe 48 et d'une partie mobile 50 qui est disposée dans le prolongement longitudinal de la partie fixe et qui peut se déplacer longitudinalement vers l'amont et vers l'aval par rapport à la partie fixe 48 et par rapport au capot primaire 36 de façon à varier la section de col 44 et/ou la section d'éjection 46 de la tuyère.

De façon plus précise, la partie fixe 48 du capot secondaire possède une forme annulaire ayant un diamètre interne décroissant vers l'aval. Quant à la partie mobile 50, elle possède une portion amont 50a sensiblement cylindrique disposée à l'intérieur de la partie fixe 48 du capot secondaire de façon concentrique à celle-ci et se prolongeant vers l'aval par une portion aval 50b. Cette dernière présente un diamètre interne qui décroît vers l'aval dans la continuité du diamètre décroissant de la partie fixe 48 du capot secondaire. Ainsi, lorsque la partie mobile 50 du capot secondaire se situe dans la position illustrée en traits pleins à la figure 2, sa portion aval 50b se situe dans le prolongement de la partie fixe 48 et reproduit la géométrie générale de la nacelle 16 de la turbomachine. En outre, au niveau de sa portion en regard de la partie mobile 50 du capot secondaire 40, le capot primaire 36 présente une portion annulaire 36a ayant un diamètre externe décroissant vers l'aval.

Avec un tel arrangement, lorsque la partie mobile 50 du capot secondaire 40 se situe dans la position illustrée en traits pleins à la figure 2 (c'est-à-dire dans une position extrême vers l'aval), la section de col 44 et la section d'éjection 46 de la tuyère 32 sont dans une position dite « nominale » qui est par exemple optimisée pour le vol en croisière. Comme indiqué précédemment, dans cette position, les parties fixe et mobile du capot secondaire sont disposées l'une par rapport à l'autre de façon à reproduire la géométrie générale de la nacelle 16 de la turbomachine, ce qui limite les effets néfastes pouvant être produits par la division du capot secondaire en deux parties.

Lorsque la partie mobile 50 du capot secondaire 40 est déplacée longitudinalement vers l'amont dans la position illustrée en traits pointillés à la figure 2 (c'est-à-dire dans une position extrême vers l'amont), la partie mobile 50 du capot se rétracte sous la partie fixe 48 et la section de col 44' et la section d'éjection 46' de la tuyère sont dans une position réduite au maximum par rapport à leur position respective en traits pleins de la figure 2. Cette position est par exemple optimisée pour le haut et bas régime de fonctionnement de la turbomachine. A titre d'exemple, entre les deux positions extrêmes de la partie mobile 50 du capot secondaire 40, il est possible d'obtenir une fermeture de la section d'éjection 46 de la tuyère de l'ordre de 15%.

Le déplacement longitudinal de la partie mobile 50 du capot secondaire peut être réalisé au moyen d'au moins un vérin 52 fixé sur la partie fixe 48 du capot secondaire, relié à la partie mobile et commandé par un dispositif de contrôle adéquat (non représenté sur les figures) permettant d'obtenir un déplacement continu de la partie mobile entre ses deux positions extrêmes. Bien entendu, tout autre moyen équivalent pourrait être utilisé pour déplacer le segment mobile par rapport au reste du capot primaire.

Lors du déplacement vers l'amont de la partie mobile 50, une « marche » (ou découpe perpendiculaire à l'écoulement dans le canal secondaire) apparaît inévitablement entre les parties fixes et mobile du capot secondaire de la tuyère. Une telle cassure dans la géométrie générale de la nacelle de la turbomachine a pour effet d'engendrer une forte traînée dans le sillage de celle-ci, ce qui est particulièrement préjudiciable pour les performances aérodynamiques de la nacelle.

Toujours selon l'invention, afin d'atténuer la traînée parasite produite par une telle « marche », la partie fixe 48 du capot secondaire 40 présente une pluralité de motifs répétitifs 54 qui sont espacés circonférentiellement et disposés dans le prolongement longitudinal de son bord de fuite, et la partie mobile 50 du capot secondaire comporte sur sa surface externe une pluralité d'empreintes 56 de formes complémentaires aux motifs 54 de la partie fixe.

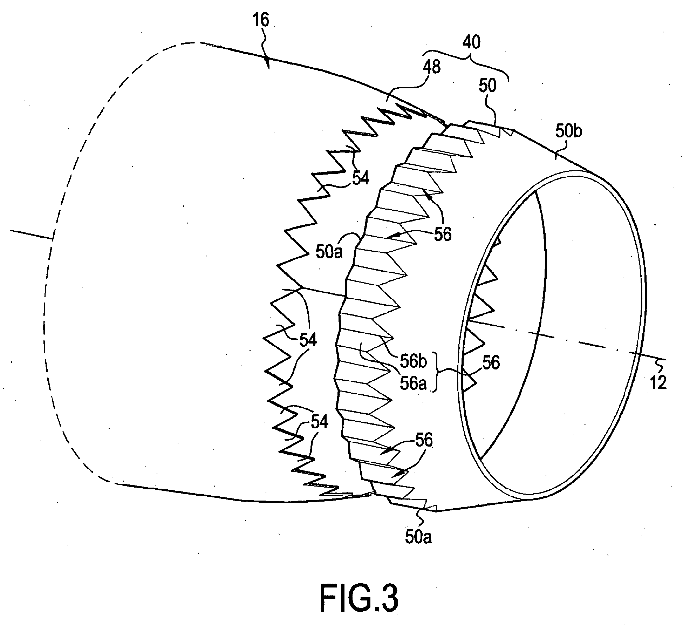

Dans l'exemple de réalisation de la figure 3, la partie fixe 48 du capot secondaire possède une pluralité de motifs 54 à forme triangulaire. Ainsi, l'écoulement le long du capot secondaire tourbillonne autour de la pointe de ces motifs triangulaires 54 en conservant une composante selon l'axe longitudinal 12 de la turbomachine, ce qui réduit la traînée. De plus, les motifs triangulaires peuvent atténuer les émissions acoustiques en réduisant le cisaillement à l'éjection.

Bien entendu, une forme de motif rectangulaire ou carrée permet aussi de réduire la traînée parasite produite par la cassure dans la géométrie générale de la nacelle.

Avec une forme triangulaire, la partie mobile 50 du capot secondaire possède sur sa surface externe au niveau de sa portion amont 50a une empreinte 56a ayant une section transversale en forme de V ouvert vers l'extérieur et se prolongeant au niveau de la portion aval 50b par une entaille 56b de forme triangulaire.

On notera que la présence de tels motifs répétitifs dans la partie d'accrochage de la nacelle à une aile de l'avion via un pylône peut avoir une influence négative sur la traînée d'installation. Il est en effet possible que la brusque augmentation de la section entre l'aile de l'avion et la nacelle provoque un choc ou augmente l'intensité d'un choc existant. Afin de se prémunir d'un tel phénomène, il peut être ménagé dans cette partie d'accrochage de la nacelle par le pylône une zone dépourvue de motifs répétitifs.

## Revendications

1. Tuyère (32) d'éjection des gaz pour turbomachine à double flux, comportant un corps central annulaire (34) centré sur un axe longitudinal (12) de la tuyère, un capot primaire annulaire (36) entourant de façon coaxiale le corps central pour délimiter avec celui-ci un canal annulaire primaire (38), et un capot secondaire annulaire (40) entourant de façon coaxiale le capot primaire pour délimiter avec celui-ci un canal annulaire secondaire (42) coaxial au canal primaire, le capot secondaire (40) se composant d'une partie fixe (48) et d'une partie mobile (50) disposée dans le prolongement longitudinal de la partie fixe et pouvant se déplacer longitudinalement vers l'amont et vers l'aval par rapport à la partie fixe et par rapport au capot primaire de façon à varier la section d'éjection (46) et/ou de col (44) de la tuyère, **caractérisée en ce que** la partie fixe (48) du capot secondaire présente une pluralité de motifs répétitifs (54) espacés circonférentiellement et disposés dans le prolongement longitudinal de son bord de fuite, les motifs ayant chacun une forme choisie parmi: un triangle, un rectangle et un carré, et la partie mobile (50) du capot secondaire comporte sur sa surface externe une pluralité d'empreintes (56) de formes complémentaires aux motifs de la partie fixe.

2. Tuyère selon la revendication 1, dans laquelle la partie mobile (50) du capot secondaire (40) présente un diamètre interne décroissant vers l'aval et le capot primaire (36) présente au niveau de sa portion en regard de la partie mobile du capot secondaire une portion annulaire aval (36a) ayant un diamètre externe décroissant vers l'aval, la partie mobile du capot secondaire pouvant être déplacée longitudinalement entre deux positions extrêmes : une position extrême aval correspondant à une section de d'éjection (46) ou de col (44) nominale et une position extrême amont correspondant à une section d'éjection ou de col réduite au maximum.

3. Tuyère selon l'une des revendications 1 et 2, dans laquelle le capot secondaire (40) comporte au moins un vérin (52) destiné à déplacer longitudinalement la partie mobile (50) dudit capot.

4. Turbomachine à double flux, **caractérisée en ce qu'**elle comporte une tuyère (32) d'éjection des gaz selon l'une quelconque des revendications 1 à 3.

## Patentansprüche

1. Abgasdüse (32) für eine Zweistrom-Turbomaschine, umfassend einen mittleren ringförmigen Körper (34), der um eine Längsachse (12) der Düse zentriert ist, eine ringförmige Primärverkleidung (36), die den mittleren Körper koaxial umschließt, um mit diesem einen ringförmigen Primärkanal (38) zu begrenzen, und eine ringförmige Sekundärverkleidung (40), welche die Primärverkleidung koaxial umschließt, um mit dieser einen ringförmigen Sekundärkanal (42), der zu dem Primärkanal koaxial ist, zu begrenzen, wobei die Sekundärverkleidung (40) aus einem festen Teil (48) und aus einem beweglichen Teil (50) besteht, der in der Längsfortsetzung des festen Teils angeordnet ist und sich gegenüber dem festen Teil und gegenüber der Primärverkleidung in stromaufwärtiger und stromabwärtiger Richtung längs bewegen kann, um den Ausstoß- (46) und/oder Halsquerschnitt (44) der Düse zu variieren, **dadurch gekennzeichnet, dass** der feste Teil (48) der Sekundärverkleidung eine Vielzahl von sich wiederholenden Mustern (54) aufweist, die in Umfangsrichtung beabstandet und in der Längsfortsetzung seiner Austrittskante angeordnet sind, wobei die Muster jeweils eine aus einem Dreieck, einem Rechteck und einem Quadrat ausgewählte Form aufweisen, und der bewegliche Teil (50) der Sekundärverkleidung an seiner Außenfläche eine Vielzahl von Vertiefungen (56) mit zu den Mustern des festen Teils ergänzenden Formen umfasst.

2. Düse nach Anspruch 1, bei der der bewegliche Teil (50) der Sekundärverkleidung (40) einen in stromabwärtiger Richtung abnehmenden Innendurchmesser aufweist und die Primärverkleidung (36) im Bereich ihres Abschnittes, der dem beweglichen Teil der Sekundärverkleidung gegenüberliegt, einen ringförmigen stromabwärtigen Abschnitt (36a) mit einem in stromabwärtiger Richtung abnehmenden Außendurchmesser aufweist, wobei der bewegliche Teil der Sekundärverkleidung zwischen zwei Endstellungen, einer stromabwärtigen Endstellung, die einem Nenn-Ausstoß- (46) oder Halsquerschnitt (44) entspricht, und einer stromaufwärtigen Endstellung, die einem maximal reduzierten Ausstoß- oder Halsquerschnitt entspricht, in Längsrichtung bewegt werden kann.

3. Düse nach einem der Ansprüche 1 oder 2, bei der die Sekundärverkleidung (40) wenigstens einen Zylinder (52) umfasst, der dazu bestimmt ist, den beweglichen Teil (50) der Verkleidung in Längsrichtung zu bewegen.

4. Zweistrom-Turbomaschine, **dadurch gekennzeichnet, dass** sie eine Abgasdüse (32) nach einem der Ansprüche 1 bis 3 umfasst.

## Claims

1. A gas exhaust nozzle (32) for a bypass turbomachine, the nozzle comprising an annular central body (34) centered on a longitudinal axis (12) of the nozzle, an annular primary cowl (36) surrounding the central body coaxially so as to co- operate therewith to define a primary annular channel (38), and an annular secondary cowl (40) surrounding the primary cowl coaxially so as to co-operate therewith to define a secondary annular channel (42) coaxial with the primary channel, wherein the secondary cowl (40) comprises a stationary portion (48) and a movable portion (50) extending the stationary portion longitudinally and capable of moving longitudinally upstream and downstream relative to the stationary portion and relative to the primary cowl so as to vary the exhaust section (46) and/or the throat section (44) of the nozzle, **characterized in that** the stationary portion (48) of the secondary cowl presents a plurality of repetitive patterns (54) circumferentially spaced apart and longitudinally extending its trailing edge, said patterns each having a form selected from : a triangle, a rectangle and a square, and the moving portion (50) of the secondary cowl having in its outside surface a plurality of indentations (56) of shapes complementary to the patterns of the stationary portion.

2. A nozzle according to claim 1, in which the moving portion (50) of the secondary cowl (40) presents an inside diameter that decreases going downstream, and the primary cowl (36) presents in its portion facing the movable portion of the secondary cowl, a downstream annular portion (36a) having an outside diameter that decreases going downstream, the moving portion of the secondary cowl being movable longitudinally between two extreme positions: a downstream extreme position corresponding to a nominal exhaust section (46) or throat section (44), and an upstream extreme position corresponding to an exhaust section or throat section reduced to a minimum.

3. A nozzle according to claim 1 or 2, in which the secondary cowl (40) includes at least one actuator for moving the movable portion (50) of said cowl longitudinally.

4. A bypass turbomachine, including a gas exhaust nozzle (32) according to any one of claims 1 to 3.
